# EUROPÄISCHE PATENTANMELDUNG

(11) **EP 1 927 785 A1**
(43) Veröffentlichungstag der Anmeldung: **04.06.2008**
(21) Anmeldenummer: 06024846.5
(22) Anmeldetag: 30.11.2006
(51) Int. Cl.: F16F 15/32

(54) **Aktives, dynamisches und kontinuierliches Feinwuchtsystem für rotierende Wellen**

(71) Anmelder: SIEMENS AKTIENGESELLSCHAFT, 80333 München (DE)
(72) Erfinder: Bäumer, Michael, 46244 Bottrop-Feldhausen (DE); Frey, Andreas, 55232 Alzey (DE); Huittinen, Soeren, 40231 Düsseldorf (DE); Kempen, Stefan, 44263 Dortmund (DE); Kowalski, Waldemar, 45472 Mühlheim an der Ruhr (DE); Olbricht, Daniel, 46485 Wesel (DE)

(57) **Zusammenfassung**

Die Erfindung betrifft ein Wuchtsystem (1), das ein Wuchtgewicht (2) aufweist. Das Wuchtgewicht (2) ist in einem Wuchtspalt (3) aufgenommen. Das Wuchtsystem (1) ist einem rotierenden Bauteil (4) zugeordnet. Das Wuchtgewicht (2) ist beweglich in dem Wuchtspalt(3) aufgenommen, so dass das rotierende Bauteil (4) während seiner Rotation auswuchtbar ist.

## Beschreibung

Die Erfindung betrifft ein Wuchtsystem, das ein Wuchtgewicht aufweist, das in einem Wuchtspalt aufgenommen ist, wobei das Wuchtsystem einem rotierenden Bauteil zugeordnet ist.

Bei rotierenden Bauteilen, beispielsweise bei rotierenden Generator- und/oder Turbinenwellen, müssen betriebsbedingte Unwuchtzustände ausgewuchtet werden. Eine Unwucht des rotierenden Bauteils kann z.B. zu Schädigungen des Lagers führen, das das rotierende Bauteil aufnimmt.

Bekannt ist, dass ein Wuchtgewicht mit einer vorgegebenen Masse in einen Wuchtspalt eingesetzt wird, der in dem rotierenden Bauteil eingebracht ist. Üblicherweise wird das Wuchtgewicht hierbei mit dem Wuchtspalt verschraubt, wobei in dem Wuchtspalt ein Innengewinde angeordnet ist, und wobei das Wuchtgewicht ein dazu korrespondierendes Außengewinde aufweist.

Als ein Hauptnachteil des bekannten Wuchtsystems ist anzusehen, dass das Einbringen von derartigen Zusatzgewichten (Wuchtgewicht) lediglich in vorgegebenen axialen Ebenen des rotierenden Bauteils (Positionsfixiert) mit vorgegebenen Massen realisiert werden kann. Tritt zum Beispiel eine Unwucht auf, muß die Anlage bzw. die Strömungsmaschine abgefahren werden, um das Wuchtgewicht an der erforderlichen Position in dem Wuchtspalt anzuordnen. Nachteilig ist daher weiterhin, dass das rotierende Bauteil bzw. die damit zusammenhängende Energieerzeugungsanlage oder Strömungsmaschine zum Auswuchten des rotierenden Bauteils abgefahren bzw. runtergefahren werden muss, so dass die entsprechende Anlage unplanmäßige Stillstandszeiten aufweist, die sich negativ auf ihren Wirkungsgrad auswirkt. Zudem wird die Lebensdauer der Anlage bzw. des gesamten Turbosatzes durch die relativ hohe Anzahl von Start- und Stopzyklii erheblich reduziert.

Der Erfindung liegt die Aufgabe zugrunde, ein Wuchtsystem der Eingangs genannten Art mit einfachen Mitteln dahingehend zu verbessern, dass die Lebensdauer der mit dem rotierenden Bauteil zusammenhängenden Anlage erhöht wird, wobei gleichzeitig eine Anlagenverfügbarkeit erhöht werden soll.

Erfindungsgemäß wird die Aufgabe dadurch gelöst, dass das Wuchtgewicht beweglich in dem Wuchtspalt aufgenommen ist, so dass das rotierende Bauteil während seiner Rotation auswuchtbar ist.

Vorteilhafterweise wird mit dem erfindungsgemäßen Wuchtsystem eine kontinuierliche Wuchtung bzw. Feinwuchtung während des Betriebes des rotierenden Bauteils bzw. der Generator-und/oder Turbinenwellen ermöglicht. Hierdurch wird bei der Wuchtmaßnahme selbst kein Abfahren der mit der rotierenden Bauteil zusammenhängenden Anlage mehr notwendig sein, wodurch unplanmäßige Stillstandszeiten vermieden werden. Durch die Vermeidung unnötiger Start- und Stopzyklii erhöht sich gleichzeitig die Lebensdauer des rotierenden Bauteils bzw. der damit zusammenhängenden Anlage bzw. Strömungsmaschine, wobei gleichzeitig die Anlagenverfügbarkeit erhöht wird.

Vorteilhaft ist weiterhin, dass betriebszustandsabhängige Unwuchtzustände des rotierenden Bauteils bzw. der Generator-und/oder Turbinenwelle minimiert werden können, wobei die Auswuchtung mit einem relativ geringen Aufwand von Energie durch Nutzung vorhandener mechanischer Fliehkräfte erreichbar ist.

Zweckmäßig im Sinne der Erfindung ist, wenn das Wuchtgewicht in Radialrichtung des rotierenden Bauteils beweglich ist.

In einer ersten vorteilhaften Ausgestaltung ist vorgesehen, dass das Wuchtgewicht von einem Trägermedium getragen wird, wobei das Trägermedium mittels zumindest eines Steuerelementes in seinem Volumen in dem Wuchtspalt veränderbar ist. Als Trägermedium kann beispielsweise eine Hydraulikflüssigkeit vorgesehen sein, wobei als Trägermedium aber auch Luft (Pneumatik) eingesetzt werden kann.

Damit das Trägermedium nicht aus dem Wuchtspalt entweichen kann, ist vorteilhafterweise vorgesehen, dass das Wuchtgewicht zumindest ein Dichtelement zur Abdichtung zur Innenwand des Wuchtspalts hin aufweist. Das Dichtelement kann beispielsweise als O-Ring ausgeführt sein, wobei bevorzugterweise zwei Dichtelemente eingesetzt werden, die in Axialrichtung des Wuchtgewichts bzw. in Radialrichtung des rotierenden Bauteils gesehen zueinander beanstandet und zum einen an einem Fußende und zum anderen an einem Kopfende des Wuchtgewichts angeordnet sind.

Um zu vermeiden, dass das Wuchtgewicht aufgrund der mechanischen Fliehkräfte aus dem Wuchtspalt heraustreten kann, ist es günstig im Sinne der Erfindung, wenn dem Wuchtspalt zumindest ein Anschlag zugeordnet ist. Der zumindest eine Anschlag ist hierbei einer Öffnungsseite des Wuchtspaltes zugeordnet und erstreckt sich von der Innenwand in Richtung zu einer Mittelachse des Wuchtspaltes in diesen hinein.

In einer weiter vorteilhaften Ausgestaltung der Erfindung ist günstigerweise vorgesehen, dass das Wuchtgewicht einem Betätigungselement zugeordnet ist, das von einem Verstellelement betätigt wird. Zweckmäßig im Sinne der Erfindung ist, wenn das Betätigungselement und das Verstellelement in dem Wuchtspalt angeordnet sind, wobei das Betätigungselement bevorzugt als Spindel und das Verstellelement bevorzugt als Hilfsmotor bzw. Servomotor ausgeführt ist, wobei das Wuchtgewicht entlang der Spindel in dem Wuchtspalt bewegbar ist. Günstig im Sinne der Erfindung ist, wenn das Wuchtgewicht eine zentrale Bohrung aufweist, durch welche das Betätigungselement geführt ist. Die zentrale Bohrung weist hierbei ein zur Spindel korrespondierendes Gewinde auf, so dass das Wuchtgewicht, je nachdem welchen Drehsinn die Spindel durch den Hilfsmotor bzw. durch den Servomotor erfährt, in radialer Richtung des rotierenden Bauteils bewegbar ist.

Weitere vorteilhafte Ausgestaltungen der Erfindung sind in den Unteransprüchen und der folgenden Figurenbeschreibung offenbart.

### Es zeigen:

- Fig. 1: ein erstes Wuchtsystem in einem Querschnitt, und
- Fig. 2: ein zweites Wuchtsystem in einem Querschnitt.

In den unterschiedlichen Figuren sind gleiche Teile stets mit denselben Bezugszeichen versehen, so dass diese in der Regel auch nur einmal beschrieben werden.

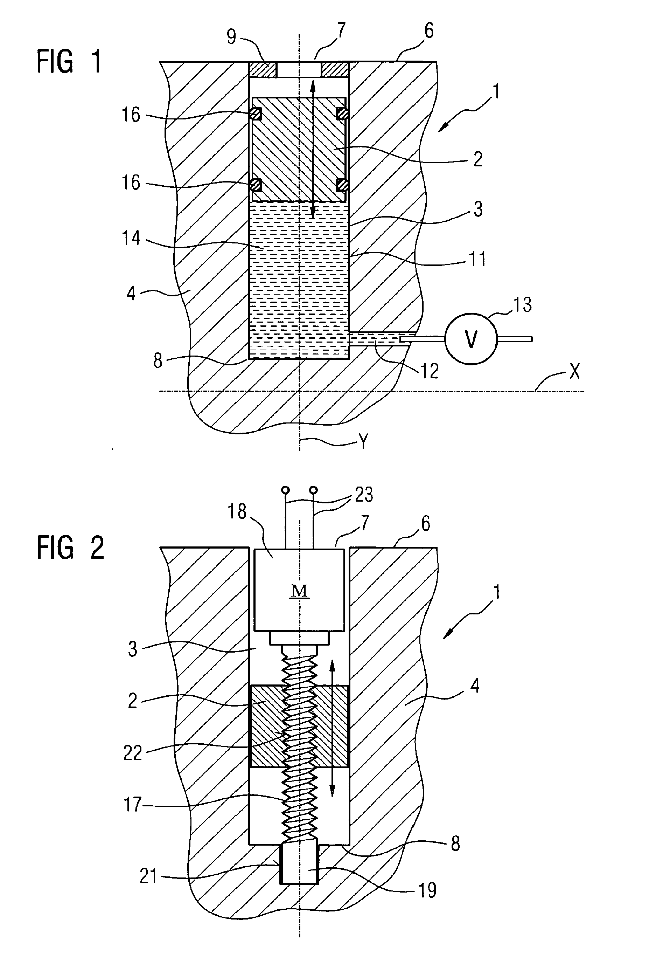

Figur 1 zeigt ein Wuchtsystem 1 in einer ersten Ausgestaltung im Querschnitt. Das Wuchtsystem 1 weist ein Wuchtgewicht 2 auf, das in einem Wuchtspalt 3 aufgenommen ist. Das Wuchtsystem 1 ist einem rotierenden Bauteil 4 zugeordnet.

Das rotierende Bauteil 4 ist z.B. als Generatorwelle und/oder Turbinenwelle ausgeführt, die beispielhaft jeweils mit einer Energieerzeugungsanlage oder einer Strömungsmaschine zusammenhängt.

Das Wuchtgewicht 2 ist beweglich in dem Wuchtspalt 3 aufgenommen, so dass das rotierende Bauteil 4 während seiner Rotation auswuchtbar ist.

Der Wuchtspalt 3 erstreckt sich von einer Oberfläche 6 des rotierenden Bauteils 4 in Radialrichtung gesehen in Richtung zu einer Mittelachse X des rotierenden Bauteils 4. Mit seiner zur Oberfläche 6 orientierten Kopfseite 7 ist der Wuchtspalt 3 geöffnet, wobei seine zur Kopfseite 7 gegenüberliegende Fußseite 8 verschlossen ist.

Der Kopfseite 7 ist zumindest ein Anschlag 9 zugeordnet, der sich von Innenwänden 11 des Wuchtspaltes 3 in Richtung zu einer Mittelachse Y erstreckt. Der in dem dargestellten Ausführungsbeispiel nach Figur 1 an der Kopfseite 7 angeordnete Anschlag 9 erstreckt sich voll umfänglich an der Innenwand 11 der Kopfseite 7.

Im Bereich der Fußseite 8 ist ein Kanal 12 angeordnet, der zum einen in dem Wuchtspalt 3 und zum anderen in einem Regelelement 13 mündet. Das Regelelement 13 kann beispielsweise als elektrisch regelbares Ventil ausgeführt sein, das vorzugsweise mittels einem geschlossenen, modelbasiertem Reglersystem ansteuerbar ist.

In dem Wuchtspalt 3 ist ein Trägermedium 14 angeordnet, welches in dem dargestellten Ausführungsbeispiel als Hydraulikflüssigkeit ausgeführt ist, so dass in dem Wuchtspalt quasi eine Mediumsäule bzw. eine Flüssigkeitssäule angeordnet ist. Die Füllstandshöhe der Hydraulikflüssigkeit in dem Wuchtspalt 3 wird durch das Regelelement 13 gesteuert.

Das Trägermedium 14 trägt das Wuchtgewicht 2, welches kopfseitig als auch fußseitig Dichtelemente 16 aufweist, um das Wuchtgewicht 2 zur Innenwand 11 des Wuchtspaltes 3 abzudichten, so dass das Trägermedium 14 nicht aus dem Wuchtspalt 3 entweichen kann.

Mittels des in dem Figur 1 bevorzugten Ausführungsbeispiels wird eine dynamische Verschiebung des Wuchtgewichtes 2 in dem Wuchtspalt 3 in radialer Richtung des rotierenden Bauteils 4 durch Nutzung der vorhandenen Fliehkräfte bewirkt, die z.B. auf die Flüssigkeitssäule im Wuchtspalt 3 (Trägermedium 14) wirken, die durch das Regelelement 13 bzw. durch elektrisch regelbare Ventile steuerbar ist.

Zum Auswuchten des rotierenden Bauteils 4 kann dieses vorteilhaft während des Betriebes bzw. während seiner Rotation erfolgen, wobei die jeweiligen Unwuchtzustände bzw. einzuleitenden Wuchtmaßnahmen mit geeigneten Mitteln aufnehmbar sind, so dass die Auswuchtung bzw. Feinwuchtung entsprechend durchgeführt werden kann.

In Figur 2 ist ein weiteres Ausführungsbeispiel des erfindungsgemäßen Wuchtsystems 1 im Querschnitt dargestellt. In dem Wuchtspalt 3 ist ein Betätigungselement 17 angeordnet, das von einem Verstellelement 18 betätigt wird. Das Betätigungselement 17 ist beispielsweise als Spindel ausgeführt, wobei das Verstellelement 18 beispielsweise als Hilfsmotor z.B. als Servomotor ausgeführt ist.

Das Verstellelement 18 ist im Bereich der Oberfläche 6 des rotierenden Bauteils 4 in dem Wuchtspalt 3 aufgenommen und schließt bevorzugt bündig mit der Oberfläche 6 ab. Die Spindel erstreckt sich von dem Verstellelement 18 in Richtung zur Fußseite 8 des Wuchtspaltes 3 und ist mit seinem Fuß 19 in einer entsprechend angepassten Vertiefung 21, welche der Fußseite 8 zugeordnet ist, aufgenommen.

Das Wuchtgewicht 2 weist eine zentrale Bohrung 22 auf, die ein zur Spindel korrespondierendes Innengewinde aufweist, so dass das Wuchtgewicht 2 entlang des Betätigungselementes 17 bzw. der Spindel in radialer Richtung des rotierenden Bauteils 4 bewegbar ist.

Die in Figur 2 dargestellten elektrischen Verbindungsleitungen 23 zur Steuerung des Verstellelementes 18 sind lediglich beispielhaft dargestellt und können selbstverständlich auch durch ein Funksystem ersetzt werden, so dass das Verstellelement 18 funkferngesteuert sein kann, wobei das Wuchtgewicht 2, je nachdem welchen Drehsinn das Betätigungselement 17 durch das Verstellelement 18 erfährt, in radialer Richtung des rotierenden Bauteils 4 entlang des Betätigungselementes 17 bewegbar ist.

Die Verbindungsleitungen 23 können natürlich auch in einem Kanal innerhalb des rotierenden Bauteils 4 verlaufen, der bevorzugt in einer Drehachse des rotierenden Bauteils 4 angeordnet sein kann.

## Patentansprüche

1. Wuchtsystem,
das ein Wuchtgewicht (2) aufweist, das in einem Wuchtspalt (3) aufgenommen ist,
wobei das Wuchtsystem (1) einem rotierenden Bauteil (4) zugeordnet ist,
**dadurch gekennzeichnet, dass**
das Wuchtgewicht (2) beweglich in dem Wuchtspalt (3) aufgenommen ist, so dass das rotierenden Bauteil (4) während seiner Rotation auswuchtbar ist.

2. Wuchtsystem nach Anspruch 1,
**dadurch gekennzeichnet, dass**
das Wuchtgewicht (2) in Radialrichtung des rotierenden Bauteils (4) beweglich ist.

3. Wuchtgewicht nach Anspruch 1 oder 2,
**dadurch gekennzeichnet, dass**
das Wuchtgewicht (2) von einem Trägermedium (14) getragen wird,
wobei das Trägermedium (14) mittels zumindest einem Steuerelement (13) in seinem Volumen in dem Wuchtspalt (3) veränderbar ist.

4. Wuchtsystem nach einem der vorhergehenden Ansprüche,
**dadurch gekennzeichnet, dass**
das Wuchtgewicht (2) zumindest ein Dichtelement (16) zur Abdichtung zur Innenwand (11) des Wuchtspalts (3) aufweist.

5. Wuchtsystem nach einem der vorhergehenden Ansprüche,
**dadurch gekennzeichnet, dass**
dem Wuchtspalt (3) zumindest ein Anschlag (9) zugeordnet ist.

6. Wuchtsystem nach Anspruch 1 oder 2,
**dadurch gekennzeichnet, dass**
das Wuchtgewicht (2) einem Betätigungselement (17) zugeordnet ist, das von einem Verstellelement (18) betätigt wird.

7. Wuchtsystem nach Anspruch 6
**dadurch gekennzeichnet, dass**
das Betätigungselement (17) und das Verstellelement (18) in dem Wuchtspalt (3) angeordnet ist.

8. Wuchtsystem nach Anspruch 6 oder 7,
**dadurch gekennzeichnet, dass**
das Betätigungselement (17) als Spindel und das Verstellelement (18) als Hilfsmotor ausgeführt ist,
wobei das Wuchtgewicht (2) entlang des Betätigungselementes (17) bewegbar ist.

9. Wuchtsystem nach einem der Ansprüche 6 bis 8,
**dadurch gekennzeichnet, dass**
das Wuchtgewicht (2) eine zentrale Bohrung (22) aufweist, durch welche das Betätigungselement (17) geführt ist.
